(19) Europäisches Patentamt / European Patent Office / Office européen des brevets

(11) **EP 3 861 291 B1**

(12) **EUROPEAN PATENT SPECIFICATION**

(45) Date of publication and mention of the grant of the patent:
**25.01.2023 Bulletin 2023/04**

(21) Application number: **19891683.5**

(22) Date of filing: **20.12.2019**

(51) International Patent Classification (IPC):
*G01C 21/34* (2006.01)   *G05D 1/02* (2020.01)
*B60W 60/00* (2020.01)   *B60W 50/00* (2006.01)

(52) Cooperative Patent Classification (CPC):
**B60W 60/001; G01C 21/3407;** B60W 2050/006

(86) International application number:
**PCT/CN2019/127123**

(87) International publication number:
**WO 2021/120200 (24.06.2021 Gazette 2021/25)**

(54) **SPLINE CURVE AND SPIRAL CURVE BASED REFERENCE LINE SMOOTHING METHOD**

VERFAHREN ZUM GLÄTTEN VON REFERENZLINIEN AUF DER GRUNDLAGE EINER SPLINE-KURVE UND EINER SPIRALKURVE

PROCÉDÉ DE LISSAGE D'UNE LIGNE DE RÉFÉRENCE SUR LA BASE D'UNE COURBE EN SPIRALE ET D'UNE COURBE SPLINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.08.2021 Bulletin 2021/32**

(73) Proprietors:
• **Baidu.com Times Technology (Beijing) Co., Ltd. Beijing 100080 (CN)**
• **Baidu USA LLC Sunnyvale, California 94089 (US)**

(72) Inventors:
• **MA, Lin Beijing 100080 (CN)**
• **ZHU, Fan Sunnyvale, CA 94089 (US)**
• **XU, Xin Beijing 100000 (CN)**

(74) Representative: **Nederlandsch Octrooibureau P.O. Box 29720 2502 LS The Hague (NL)**

(56) References cited:
CN-A- 109 540 159    CN-A- 110 516 880
US-A1- 2019 079 528   US-A1- 2019 086 925
US-A1- 2019 187 715   US-A1- 2019 361 443
US-A1- 2019 361 452

• **Daniel Mellinger ; Alex Kushleyev ; Vijay Kumar: "Mixed-integer quadratic program trajectory generation for heterogeneous quadrotor teams", Robotics and Automation (ICRA), 2012 IEEE International Conference on, IEEE, 14 May 2012 (2012-05-14), pages 477-483, XP032194604, DOI: 10.1109/ICRA.2012.6225009 ISBN: 978-1-4673-1403-9**
• **Jie Chen; Dong Wei; Sheng Xinjun; Zhu Xiangyang: "Regional Trajectory Planning of Unmanned Aerial Vehicles Based on Spiral Spline", China Mechanical Engineering, vol. 30, no. 12, 30 June 2019 (2019-06-30) , pages 1453-1459, XP055746333, ISSN: 1004-132X, DOI: 10.3936/j.issn.1004-132x.2019.12.011**

**Description**

TECHNICAL FIELD

Embodiments of the present disclosure relate generally to operating autonomous driving vehicles. More particularly, embodiments of the disclosure relate to smoothing a reference line for operating autonomous driving vehicles.

BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers. Motion planning and control are critical operations in autonomous driving. Particularly, trajectory planning is a critical component in an autonomous driving system. Conventional trajectory planning techniques rely heavily on high-quality reference lines, which are guidance paths, e.g., a center line of a road, for autonomous driving vehicles, to generate stable trajectories.

Reference lines can be generated from map data points, typically a sequence of twodimensional (2D) points in the world coordinate. Reference lines directly generated from the map data points are raw reference lines, which may lack the required smoothness and therefore can lead to unstable and oscillating trajectories between planning cycles. Documents US 2019/0079528 A1 and US 2019/0361443 A1 disclose path planning techniques for autonomous vehicles that employ quadratic programming for obtaining an optimal trajectory.

SUMMARY

In a first aspect, a computer-implemented method for operating an autonomous driving vehicle (ADV) is provided. The method includes: in response to receiving a raw reference line representing a route from a first location to a second location associated with an ADV, smoothing the raw reference line using a Quadratic programming (QP) spline smoothing method to generate a first smoothed reference line; identifying one or more segments on the smoothed reference line, wherein each of the identified reference line segments includes a curvature that exceeds a predetermined size; smoothing each of the segments using a spiral smoothing method, including optimizing the segments in view of a set of constraints using an objective function, such that an output of the objective function reaches a minimum value while the set of constraints are satisfied, generating a second smoothed reference line; and planning a trajectory based on the second smoothed reference line to control the ADV.

In a second aspect, a non-transitory machine-readable medium having instructions stored is provided. The instructions, when executed by a processor, cause the processor to perform operations of operating an autonomous driving vehicle (ADV), the operations including in response to receiving a raw reference line representing a route from a first location to a second location associated with an ADV, smoothing the raw reference line using a Quadratic programming (QP) spline smoothing method to generate a first smoothed reference line; identifying one or more segments on the smoothed reference line, wherein each of the identified reference line segments includes a curvature that exceeds a predetermined size; smoothing each of the segments using a spiral smoothing method, including optimizing the segments in view of a set of constraints using an objective function, such that an output of the objective function reaches a minimum value while the set of constraints are satisfied, generating a second smoothed reference line; and planning a trajectory based on the second smoothed reference line to control the ADV.

In a third aspect, a data processing system is provided. The data processing system includes a processor; and a memory coupled to the processor to store instructions, which when executed by the processor, cause the processor to perform operations of operating an autonomous driving vehicle (ADV), the operations including: in response to receiving a raw reference line representing a route from a first location to a second location associated with an ADV, smoothing the raw reference line using a Quadratic programming (QP) spline smoothing method to generate a first smoothed reference line; identifying one or more segments on the smoothed reference line, wherein each of the identified reference line segments includes a curvature that exceeds a predetermined size; smoothing each of the segments using a spiral smoothing method, including optimizing the segments in view of a set of constraints using an objective function, such that an output of the objective function reaches a minimum value while the set of constraints are satisfied, generating a second smoothed reference line; and planning a trajectory based on the second smoothed reference line to control the ADV.

BRIEF DESCRIPTION OF THE DRAWINGS

Embodiments of the disclosure are illustrated by way of example and not limitation in the figures of the accompanying drawings in which like references indicate similar elements.

Figure 1 is a block diagram illustrating a networked system according to one embodiment.

Figure 2 is a block diagram illustrating an example of an autonomous vehicle according to one embodiment.

Figures 3A-3B are block diagrams illustrating an example of a perception and planning system used with an autonomous vehicle according to one embodiment.

Figure 4 illustrates an example smoothing module in accordance with an embodiment.

Figure 5 illustrates an example implementation of a smoothing module in accordance with an embodiment.

Figure 6 illustrate an example use of a QP spline smoother in accordance with an embodiment.

Figure 7 illustrate an example use of a spiral smoother accordance with an embodiment.

Figure 8 is a flow diagram illustrating an example of a process for smoothing a reference line according to one embodiment.

DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

As generally described above, various reference line smoothing techniques can be used to smooth a raw reference line for more comfortable driving. A reference line can be smoothed using either a Quadratic programming (QP) spline smoother or a spiral smoother. Each reference line smoother has its own drawbacks and is better suited to certain situations.

In one embodiment, an exemplary method includes the operations of receiving a raw reference line representing a route from a first location to a second location associated with an autonomous driving vehicle (ADV); and smoothing the raw reference line using a Quadratic programming (QP) spline smoother to generate a smoothed reference line. The method further includes the operations of identifying one or more segments on the smoothed reference line, each of the identified reference line segments including a curvature that exceeds a predetermined size; and smoothing each of the one or more identified reference line segments using a spiral smoother, including optimizing each identified curvature in view of a set of constraints, such that an output of the objective function reaches a minimum value while the set of constraints are satisfied; and controlling the ADV using the smoothed reference line.

In one embodiment, the size of the curvature is measured by a radius or a degree of the curvature. The QP spline smoother and the spiral smoother are applied to the raw reference line during a same planning cycle or during different planning cycles. The predetermined size of each identified curvature can be dynamically adjustable based on road conditions of the route and a speed of the ADV. The one or more curvatures includes one or more of a U-turn, a left turn, or a right turn.

In one embodiment, at least one of the set of constraints are dynamically tunable, and the set of constraints represent an initial location, a direction, and a curvature of the ADV.

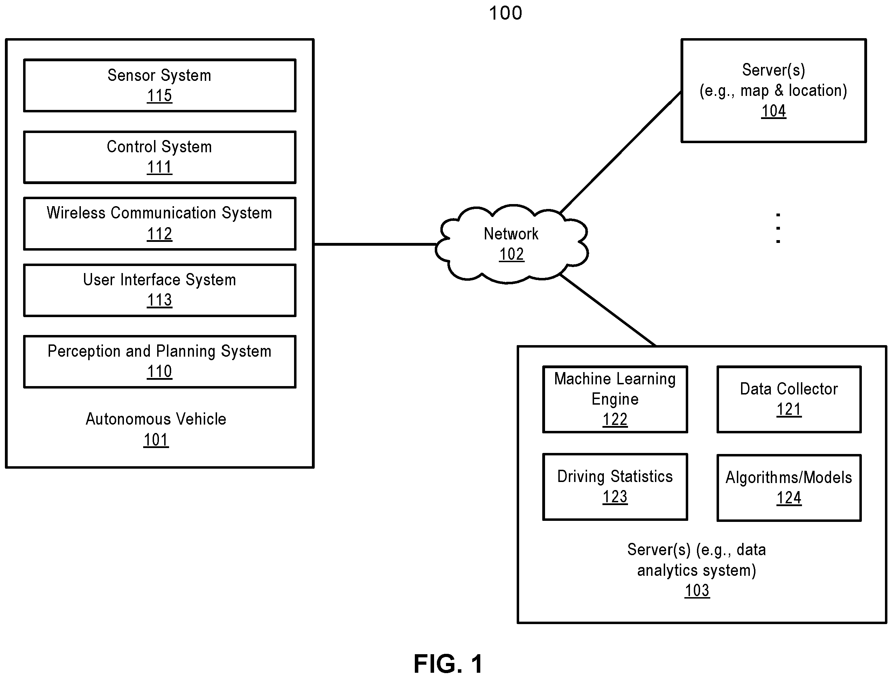

Figure 1 is a block diagram illustrating an autonomous vehicle network configuration according to one embodiment of the disclosure. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) severs, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode.

In one embodiment, autonomous vehicle 101 includes, but is not limited to, perception and planning system 110, vehicle control system 111, wireless communication system 112, user interface system 113, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

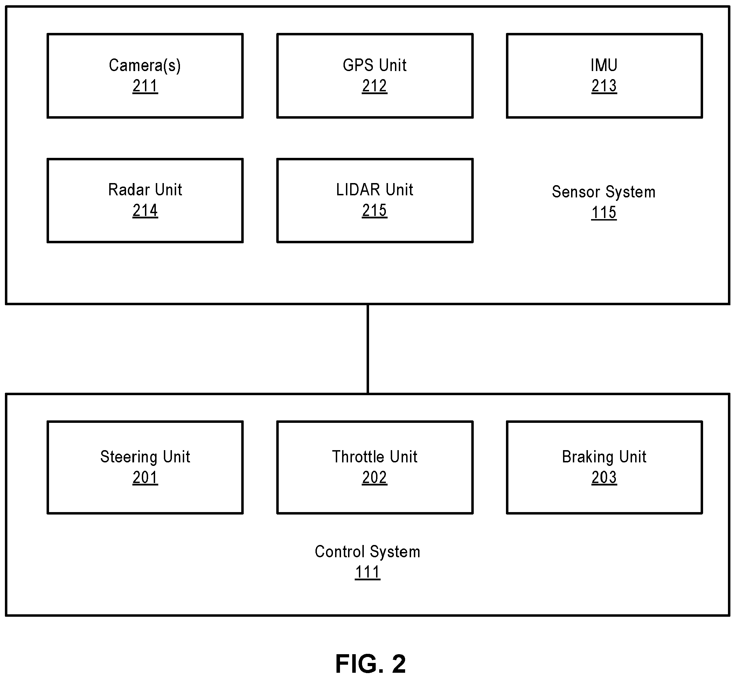

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the autonomous vehicle. IMU unit 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn control the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyword, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110.

While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either autonomous vehicles or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes. In one embodiment, for example, algorithms 124 may include an optimization method to optimize path planning and speed planning. The optimization method may include a set of cost functions and polynomial functions to represent path segments or time segments. These functions can be uploaded onto the autonomous driving vehicle to be used to generate a smooth path at real time.

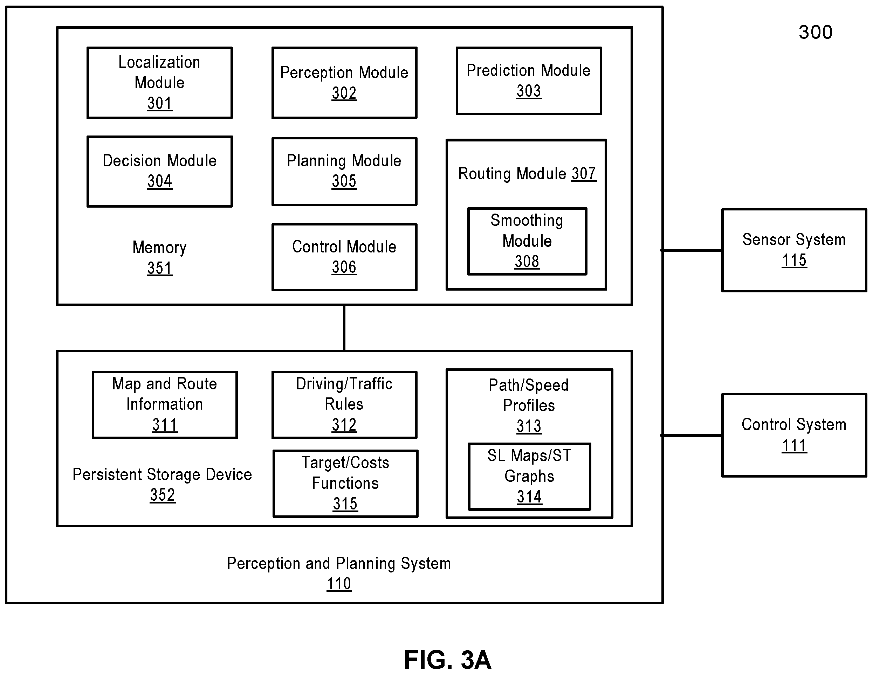

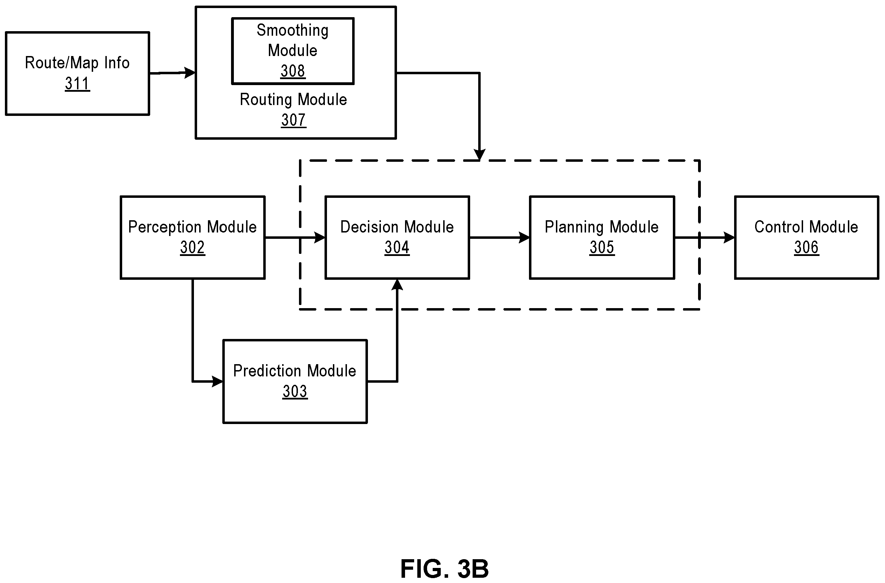

Figures 3A and 3B are block diagrams illustrating an example of a perception and planning system used with an autonomous vehicle according to one embodiment. System 300 may be implemented as a part of autonomous vehicle 101 of Figure 1 including, but is not limited to, perception and planning system 110, control system 111, and sensor system 115. Referring to Figures 3A-3B, perception and planning system 110 includes, but is not limited to, localization module 301, perception module 302, prediction module 303, decision module 304, planning module 305, control module 306, routing module 307, and smoothing module 308.

Some or all of modules 301-308 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-308 may be integrated together as an integrated module. For example, decision module 304 and planning module 305 may be integrated as a single module; and routing module 307 and smoothing module 308 may be integrated as a single module.

Localization module 301 determines a current location of autonomous vehicle 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration (e.g., straight or curve lanes), traffic light signals, a relative position of another vehicle, a pedestrian, a building, crosswalk, or other traffic related signs (e.g., stop signs, yield signs), etc., for example, in a form of an object.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Based on a decision for each of the objects perceived, planning module 305 plans a path or route for the autonomous vehicle, as well as driving parameters (e.g., distance, speed, and/or turning angle). That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, and turning commands) at different points in time along the path or route.

In one embodiment, the planning phase is performed in a number of planning cycles, also referred to as command cycles, such as, for example, in every time interval of 100 milliseconds (ms). For each of the planning cycles or command cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the autonomous vehicle. For example, the navigation system may determine a series of speeds and directional headings to effect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

Decision module 304/planning module 305 may further include a collision avoidance system or functionalities of a collision avoidance system to identify, evaluate, and avoid or otherwise negotiate potential obstacles in the environment of the autonomous vehicle. For example, the collision avoidance system may effect changes in the navigation of the autonomous vehicle by operating one or more subsystems in control system 111 to undertake swerving maneuvers, turning maneuvers, braking maneuvers, etc. The collision avoidance system may automatically determine feasible obstacle avoidance maneuvers on the basis of surrounding traffic patterns, road conditions, etc. The collision avoidance system may be configured such that a swerving maneuver is not undertaken when other sensor systems detect vehicles, construction barriers, etc. in the region adjacent the autonomous vehicle that would be swerved into. The collision avoidance system may automatically select the maneuver that is both available and maximizes safety of occupants of the autonomous vehicle. The collision avoidance system may select an avoidance maneuver predicted to cause the least amount of acceleration in a passenger cabin of the autonomous vehicle.

Routing module 307 can generate reference routes, for example, from map information such as information of road segments, vehicular lanes of road segments, and distances from lanes to curb. For example, a road can be divided into sections or segments {A, B, and C} to denote three road segments. Three lanes of road segment A can be enumerated {A1, A2, and A3 }. A reference route is generated by generating reference points along the reference route. For example, for a vehicular lane, routing module 307 can connect midpoints of two opposing curbs or extremities of the vehicular lane provided by a map data. Based on the midpoints and machine learning data representing collected data points of vehicles previously driven on the vehicular lane at different points in time, routing module 307 can calculate the reference points by selecting a subset of the collected data points within a predetermined proximity of the vehicular lane and applying a smoothing function to the midpoints in view of the subset of collected data points.

Based on reference points or lane reference points, routing module 307 may generate a reference line by interpolating the reference points such that the generated reference line is used as a reference line for controlling ADVs on the vehicular lane. In some embodiments, a reference points table and a road segments table representing the reference lines are downloaded in real-time to ADVs such that the ADVs can generate reference lines based on the ADVs' geographical location and driving direction. For example, in one embodiment, an ADV can generate a reference line by requesting routing service for a path segment by a path segment identifier representing an upcoming road section ahead and/or based on the ADV's GPS location. Based on a path segment identifier, a routing service can return to the ADV reference points table containing reference points for all lanes of road segments of interest. ADV can look up reference points for a lane for a path segment to generate a reference line for controlling the ADV on the vehicular lane.

Smoothing module 308 can generate a smooth road reference line based on a reference line provided by routing module 307. For example, smoothing module 308 selects a number of control points along a reference line. In one embodiment, the control points can be reference points of the reference line provided by routing module 307 or some interpolated points along the reference line which are approximately equally distant to their adjacent points. Smoothing module 308 uses a combination of a quadratic programming spline smoother and a spiral smoother to generate the smooth road reference line.

As described above, route or routing module 307 manages any data related to a trip or route of a user. The user of the ADV specifies a starting and a destination location to obtain trip related data. Trip related data includes route segments and a reference line or reference points of the route segment. For example, based on route map info 311, route module 307 generates a route or road segments table and a reference points table. The reference points are in relations to road segments and/or lanes in the road segments table. The reference points can be interpolated to form one or more reference lines to control the ADV. The reference points can be specific to road segments and/or specific lanes of road segments.

For example, a road segments table can be a name-value pair to include previous and next road lanes for road segments A-D. E.g., a road segments table may be: {(A1, B1), (B1, C1), (C1, D1)} for road segments A-D having lane 1. A reference points table may include reference points in x-y coordinates for road segments lanes, e.g., {(A1, (x1, y1)), (B1, (x2, y2)), (C1, (x3, y3)), (D1, (x4, y4))}, where A1 ... D1 refers to lane 1 of road segments A-D, and (x1, y1) ... (x4, y4) are corresponding real world coordinates. In one embodiment, road segments and/or lanes are divided into a predetermined length such as approximately 200 meters segments/lanes. In another embodiment, road segments and/or lanes are divided into variable length segments/lanes depending on road conditions such as road curvatures. In some embodiments, each road segment and/or lane can include several reference points. In some embodiments, reference points can be converted to other coordinate systems, e.g., latitude-longitude.

In some embodiments, reference points can be converted into a relative coordinates system, such as station-lateral (SL) coordinates. A station-lateral coordinate system is a coordinate system that references a fixed reference point to follow a reference line. For example, a (S, L) = (1, 0) coordinate can denote one meter ahead of a stationary point (i.e., the reference point) on the reference line with zero meter lateral offset. A (S, L) = (2, 1) reference point can denote two meters ahead of the stationary reference point along the reference line and an one meter lateral offset from the reference line, e.g., offset to the left by one meter.

In one embodiment, smoothing module 308 generates a smooth reference line based on reference points representing a reference line provided by routing module 307. The smooth reference line can be converted into a relative coordinate system such as a SL coordinate system before a decision module and/or a planning module such as decision module 304 and/and planning module 305 incorporates the smooth reference line with perceived obstacles and/or traffic information.

In one embodiment, decision module 304 generates a rough path profile based on a reference line (the reference line having been smoothed by smoothing module 308 as described above) provided by routing module 307 and based on obstacles and/or traffic information perceived by the ADV, surrounding the ADV. The rough path profile can be a part of path/speed profiles 313 which may be stored in persistent storage device 352. The rough path profile is generated by selecting points along the reference line. For each of the points, decision module 304 moves the point to the left or right (e.g., candidate movements) of the reference line based on one or more obstacle decisions on how to encounter the object, while the rest of points remain steady. The candidate movements are performed iteratively using dynamic programming to path candidates in search of a path candidate with a lowest path cost using cost functions, as part of costs functions 315 of Figure 3A, thereby generating a rough path profile. Examples of cost functions include costs based on: a curvature of a route path, a distance from the ADV to perceived obstacles, and a distance of the ADV to the reference line. In one embodiment, the generated rough path profile includes a station-lateral map, as part of SL maps/ST graphs 314 which may be stored in persistent storage devices 352.

In one embodiment, decision module 304 generates a rough speed profile (as part of path/speed profiles 313) based on the generated rough path profile. The rough speed profile indicates the best speed at a particular point in time controlling the ADV. Similar to the rough path profile, candidate speeds at different points in time are iterated using dynamic programming to find speed candidates (e.g., speed up or slow down) with a lowest speed cost based on cost functions, as part of costs functions 315 of Figure 3A, in view of obstacles perceived by the ADV. The rough speed profile decides whether the ADV should overtake or avoid an obstacle, and to the left or right of the obstacle. In one embodiment, the rough speed profile includes a station-time (ST) graph (as part of SL maps/ST graphs 314). Station-time graph indicates a distance travelled with respect to time.

In one embodiment, planning module 305 recalculates the rough path profile in view of obstacle decisions and/or artificial barriers to forbid the planning module 305 to search the geometric spaces of the barriers. For example, if the rough speed profile determined to nudge an obstacle from the left, planning module 305 can set a barrier (in the form of an obstacle) to the right of the obstacle to prevent a calculation for the ADV to nudge an obstacle from the right. In one embodiment, the rough path profile is recalculated by optimizing a path cost function (as part of cost functions 315) using quadratic programming (QP) and/or a spiral smoother. In one embodiment, the recalculated rough path profile includes a station-lateral map (as part of SL maps/ST graphs 314).

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

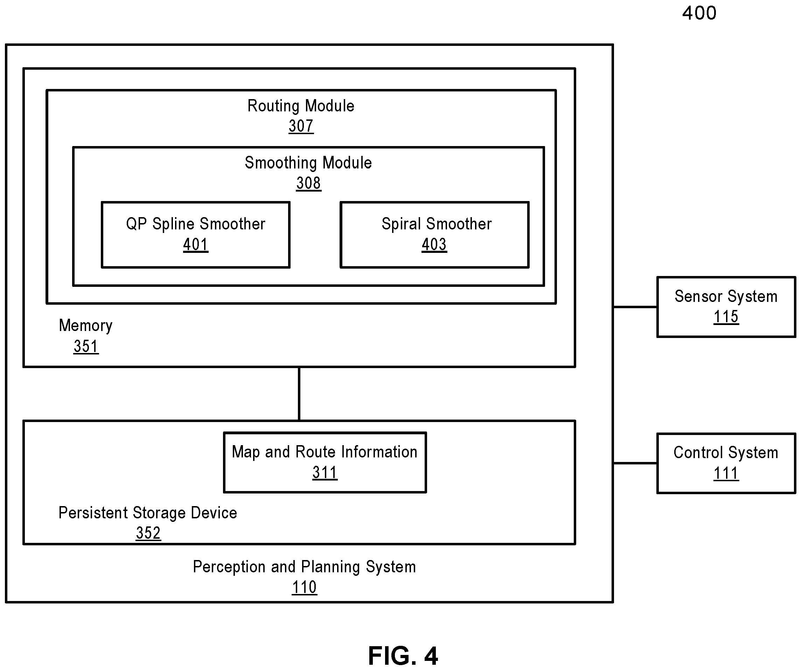

Figure 4 illustrates an example smoothing module in accordance with an embodiment. As shown in Figure 4, the smoothing module 308 can include a QP spline smoother 401 and a spiral smoother 403. The smoothing module 308 can generate a smooth reference line based on a reference line provided by routing module 307 by the combined use of the QP spline smoother 401 and the spiral smoother 403. By applying both smoothers to a raw reference line, the smoothing module 308 can overcome the drawbacks of each smoother and generate a smoothed reference line with the desired continuity and smoothness of curvature.

As an illustrative example, given a raw reference line to be smoothed, the smoothing module 308 can apply the QP spline smoother 401 first to get a preliminarily smoothed reference line. The smoothing module 308 can subsequently identify one or more curvatures of a predetermined size on the preliminarily smoothed reference line. Each curvature may have a predetermined degree or a predetermined radius. The smoothing module 308 can apply the spiral smoother 403 to each of the identified curvatures to perform a smoothing operation thereon. After both the smoothers are applied to the raw reference line, a smoothed reference line can be obtained, which has better curvature continuity than a smoothed reference line obtained using either smoother alone.

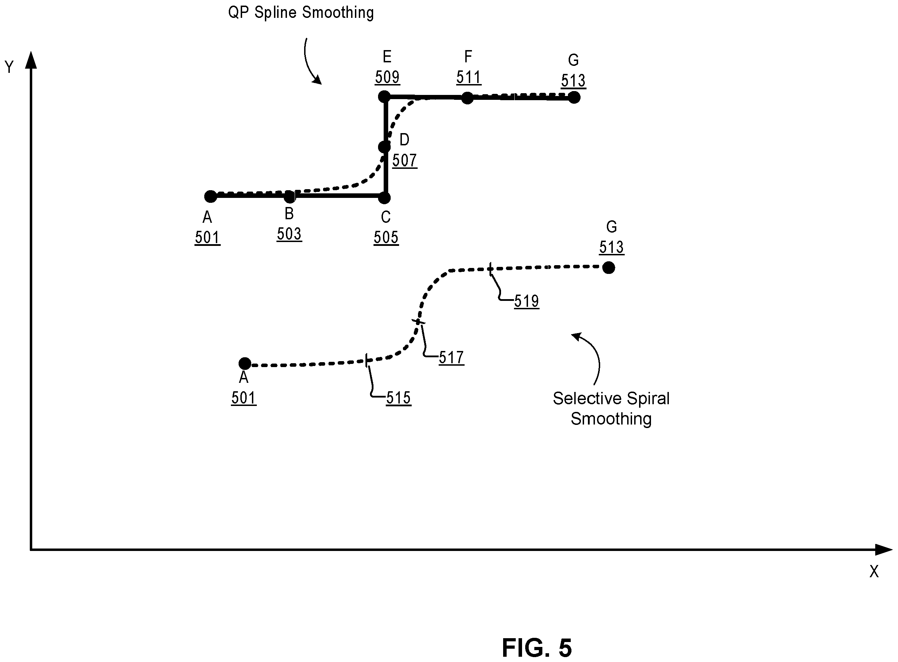

Figure 5 illustrates an example implementation of the smoothing module 308 in accordance with an embodiment. Figure 5 shows a raw reference line received from the routing module 307. The raw reference AG starts at point A 501 and ends at point G 513, and can represent a center line of a road segment obtained from a high definition map. The raw reference line AG can include a number of control points 503, 505, 507, 509 and 511, which are approximately equally spaced apart, for example, approximately five to ten meters apart.

The smoothing module 308 first can perform a QP spline smoothing operation to get a preliminarily smoothed reference as represented by the dotted line starting at point A 501 and ending at point G 513. Although the QP spline smoother tends to have good performance in terms of smoothing speed, and in smoothing reference lines with small curvatures, for example, a relatively straight line, it may generate a smoothed reference line with curvature interruption points. The curvature interruptions are particularly substantial in a smoothed reference line generated from a raw reference line with sharp turns, e.g., a U-turn.

As such, to generate a reference line with better curvature continuity, the smoothing module 308 can subsequently identity one or more curvatures that meet one or more predetermined requirements on the preliminarily smoothed reference line, and perform a spline smoothing operation on each identified curvature.

In one embodiment, each identified curvature needs to be of a particular degree, or have a particular radius. For example, the smoothing module 308, when identifying the one or more curvatures, can search for those curvatures with a degree of 45 or above, or a radius of 5 meters or above, or both. Each identified curvature can be a left turn, a right turn, a U-turn, or another road segment with a curvature that meet the one or more predetermined requirements. The requirements can be dynamically adjusted by the smoothing module 308 based on the real time road conditions.

As further shown in Figure 5, a first curvature represented by point 515 and point 517 and a second curvature represented by point 517 and point 519 are identified. The first curvature corresponds to a left turn at point C 505 on the raw reference line AG, and the second curvature corresponds to a right turn at point E 509 on the raw reference line AG. The smoothing module 308 can smooth each identified curvature on the preliminarily smoothed reference line using a spiral smoother.

In one embodiment, when identifying the one or more curvatures of a predetermined size, the smoothing module 308 can initially identify the curvatures using a variety of techniques. A curvature can be a segment of a circle of a given radius, and is connected to straight sections of the preliminarily smoothed reference line by transition curves.

According to one example technique of identifying curvatures, the preliminarily smoothed reference line can be represented by points $X_i = (x_{i1}, x_{i2})$, for $i$ = 1, ..., $n$; and can be locally approximate by a circle. In one example, the smoothing module 308 can identify a number of equally-space points on the preliminarily smoothed raw reference, and draw a circle to every three neighboring points, and then assign the radius of the circle to the middle point of these three neighboring points. Once the radius of the curvature is identified, the size of the curvature can be determined.

According to another example technique of identifying curvatures, an osculating circle can be used in conjunction with the Douglas-Peucker algorithm. The osculating circle of a curve C at a given point P is the circle that has the same tangent as C at point P as well as the same curvature. Just as the tangent line is the line best approximating a curve at a point P, the osculating circle is the best circle that approximates the curve at P. According to this technique, instead of approximating three neighboring points, the curvature of a segment line on the preliminarily smoothed reference line is approximated at one specific point. Thus, the radius of the curvature is dependent on the change in slope of the tangent to the curvature.

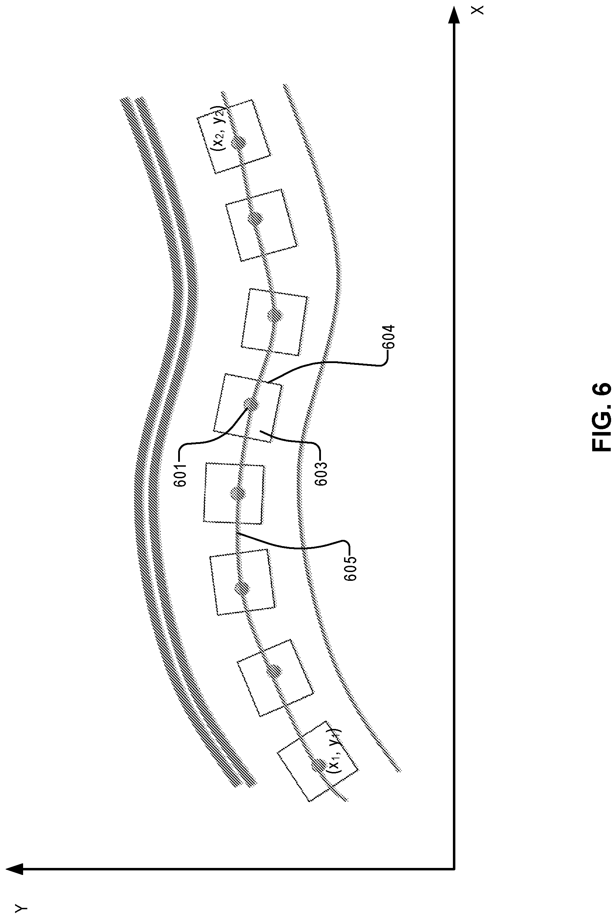

Figure 6 illustrate an example use of the QP spline smoother in accordance with an embodiment. As shown in Figure 6, a road segment (i.e., the first reference line segment $S_1$ shown in Figure 5) can include a number of control points such as control points 601. The control points can be approximately equally spaced apart, for example, approximately five to ten meters apart.

Based on control points 601, the QP spline smoother 401 can apply a 2D spline optimization to generate a smooth reference line, such as spline 605. A spline is a curve represented by one or more (e.g., piecewise) polynomials joined together to form the curve. For example, a polynomial or a polynomial function can represent a segment between adjacent control points. In one embodiment, each polynomial function within the spline can be a two dimensional polynomial(s), e.g.,

$$x(t) = p_0 + p_1 t + p_2 t^2 + \cdots + p_n t^n, \text{and} y(t) = q_0 + q_1 t + q_2 t^2 + \cdots + q_n t^n,$$

where x, *y* represents a two dimensional (x, y) geometric coordinate for a polynomial to the nth order, and $p_{0..n}$ and $q_{0..n}$ are coefficients of the two dimensional polynomial to be solved.

In another embodiment, the polynomial function can be one dimensional. E.g.,

$$l(s) = p_0 + p_1 s + p_2 s^2 + \cdots + p_n s^n,$$

where *s*, *l* represents a station-lateral one dimensional (s, 1) geometric coordinate for a polynomial to the nth order, and $p_{0..n}$ are coefficients of the one dimensional polynomials to be solved.

In one embodiment, the QP spline smoother 401 can configure an order of polynomial for the spline or piecewise polynomials to ensure a desired threshold of spline smoothness. In one embodiment, the piecewise polynomials can be preconfigured to a fifth order polynomials. Based on the control point 601, the QP spline smoother 401 can define a boundary area, such as boundary box 603 with a predefined dimension, such as, approximately 0.2 meters by 0.2 meters, to surround each of the control points 601. The boundary areas can represent an inequality constraint that the smooth reference line (e.g., spline or piecewise polynomials) 605 must touch or pass through.

In one embodiment, the QP spline smoother can add a set of initial constraints to the piecewise polynomials. The set of initial constraint can correspond to a current geographical location and/or a current directional heading of the ADV, for example,

$$x(0) = x_0 \ and \ y(0) = y_0,$$

$$x'(0) = \mathrm{d}x_0 \ and \ y'(0) = dy_0,$$

where $(x_0, y_0)$ is the current x-y coordinate of the ADV geographical location, $(dx_0, dy_0)$ is a current direction of the ADV, and x(0), y(0) corresponds to the initial values of the first x-y polynomial. In some embodiments, constraint module 603 can add a set of end constraints corresponding to a location and a direction of the ADV when the ADV reaches a destination point.

In some embodiments, the QP spline smoother 401 can select a target function with various kernels or costs functions which the spline will target on. Example target functions can include smoothing kernels and/or guidance kernels such as:

$$w_1 \int (x')^2(t)dt + w_2 \int (y')^2(t)dt + w_3 \int (x'')^2(t)dt + w_4 \int (y'')^2(t)dt$$

$$+ w_5 \int (x''')^2(t)dt + w_6 \int (y''')^2(t)dt$$

$$+ w_7 \int \left[x(t) - x_{ref}(t)\right]^2 dt + w_8 \int \left[y(t) - y_{ref}(t)\right]^2 dt$$

where $x(t)$, $y(t)$ are x-y two dimensional piecewise polynomials, $w_1, ..., w_8$ are weight factors,
$(x')^2(t)$, $(y')^2(t)$ are the first derivative squares of the piecewise polynomials,
$(x'')^2(t)$, $(y'')^2(t)$ are the second derivative squares of the piecewise polynomials,
$(x''')^2(t)$, $(y''')^2(t)$ are the third derivative squares of the piecewise polynomials, and $x_{ref}(t)$,
$y_{ref}(t)$ are x-y reference route values of average human driving routes from previously collected data.

In one embodiment, the QP spline smoother 401 can solve the target function to generate a smooth reference line. In one embodiment, a QP optimization can be performed on the target function such that the target function reaches a predetermined threshold (e.g., minimum), while the set of constraints are satisfied. Once the target function has been optimized in view of the constraints, the coefficients of the polynomial functions can be determined. Then the location of the path points (e.g., control points) along the path can be determined using the polynomial function with the optimized coefficients, which represents a smooth reference line. As described above, the smoothing function is incorporated into the target function to be solved, i.e., the smoothing is not a post processing step ensuring the optimized reference line after applying a smoothing function would still be bound to the set of defined constraints.

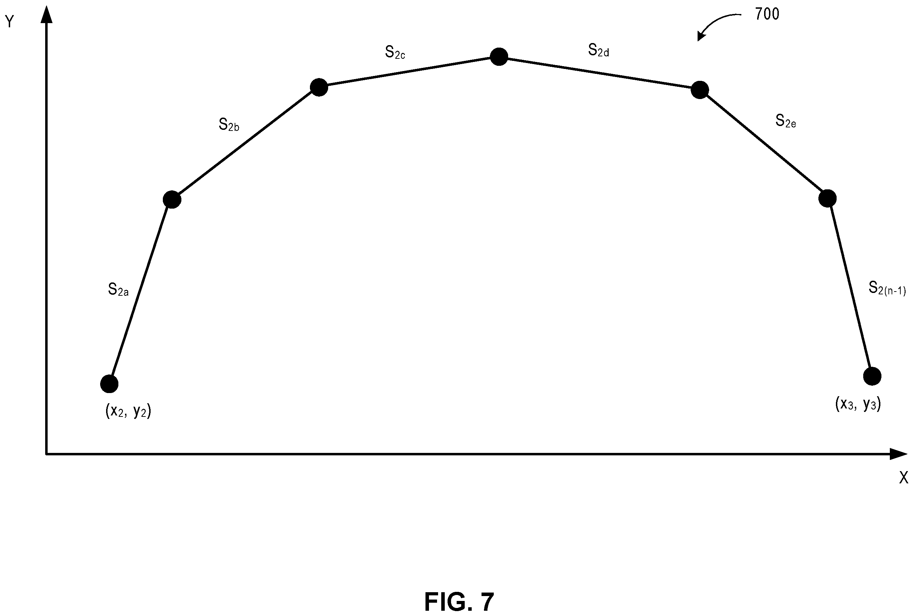

Figure 7 illustrate an example use of the spiral smoother 403 in accordance with an embodiment. In this example, the reference line segment 700 can represent the second reference line segment $S_2$ from reference point $(x_2, y_2)$ to reference point $(x_3, y_3)$. As shown, the reference line segment is further divided into a number of reference line segments. Each reference line segment is associated with a segment length, for example, $S_{2a}$, $S_{2b}$, $S_{2c}$, ... $S_{2(n-1)}$, and can be modeled using a separate quintic polynomial function.

For each of the reference line segments, the spiral smoother 403 can generate a quintic polynomial function $\theta(s)$. Thus, there are at least (n-1) quintic polynomial functions $\theta_0(s)$ to $\theta n-1(s)$. Each quintic polynomial function represents a direction of a starting reference point of the corresponding reference line segment. A derivative (e.g., the first order derivative) of the quintic polynomial function represents a curvature of the starting reference point of the reference line segment, $K = d\theta/ds$. A second order derivative of the quintic polynomial function represents a curvature change or curvature change rate, $dK/ds$.

For the purpose of illustration, following terms are defined:

- $\theta_0$: starting direction
- $\dot{\theta}_0$: starting curvature, $\kappa$, direction derivative w.r.t. curve length, i.e., $\frac{d\theta}{ds}$
- $\ddot{\theta}_0$: starting curvature derivative, i.e., $\frac{d\kappa}{ds}$
- $\theta_1$: ending direction
- $\dot{\theta}_1$: ending curvature
- $\ddot{\theta}_1$: ending curvature derivative
- $\Delta s$: the curve length between the two ends

Each piecewise spiral path is decided by seven parameters: starting direction ($\theta_0$), starting curvature ($d\theta_0$), starting curvature derivative ($d2\theta_0$),ending direction ($\theta_1$), ending curvature ($d\theta_1$), ending curvature derivative ($d2\theta_1$) and the curve length between the starting and ending points ($\Delta s$). In one embodiment, a quintic polynomial function can be defined as follows:\

$$\theta_i(s) = a * s^5 + b * s^4 + c * s^3 + d * s^2 + e * s + f,$$

which satisfies

$$\theta_i(0) = \theta_i$$

$$\dot{\theta}_i(0) = \dot{\theta}_i$$

$$\ddot{\theta}_i(0) = \ddot{\theta}_i$$

$$\theta_i(\Delta s) = \theta_{i+1}$$

$$\dot{\theta}_i(\Delta s) = \dot{\theta}_{i+1}$$

$$\ddot{\theta}_i(\Delta s) = \ddot{\theta}_{i+1}$$

Based on the above constraints, the optimization is performed on all quintic polynomial functions of all reference line segments, such that the output of a quintic polynomial function representing reference line segment (i) at zero segment length should be the same as or similar to a direction at the starting reference point of the corresponding reference line segment (i). A first order derivative of the quintic polynomial function should be the same as or similar to a curvature at the starting reference point of the reference line segment (i). A second order derivative of the quintic polynomial function should be the same as or similar to a curvature change rate at the starting reference point of the reference line segment (i). Similarly, the output of a quintic polynomial function representing reference line segment (i) at the full segment length (s) should be the same as or similar to a direction at the starting reference point of the next reference line segment (i+1), which is the ending reference point of the current reference line segment (i). A first order derivative of the quintic polynomial function should be the same as or similar to a curvature at the starting reference point of the next reference line segment (i+1). A second order derivative of the quintic polynomial function should be the same as or similar to a curvature change rate at the starting reference point of the next reference line segment (i+1).

By substituting the above variables, there will be six equations that can be utilized to solve the coefficients of the quintic polynomial function a, b, c, d, e, and f. For example, as stated above, the direction at a given point can be defined using the above quintic polynomial function:

$$\theta(s) = as^5 + bs^4 + cs^3 + ds^2 + es + f$$

The first order derivative of the quintic function represents a curvature at the point of the path:

$$d\theta = 5as^4 + 4bs^3 + 3cs^2 + 2ds + e$$

The second order derivative of the quintic function represents a curvature change rate at the point of the path:

$$d^2\theta = 20as^3 + 12bs^2 + 6cs + 2d$$

For a given spiral path or reference line segment, there are two points involved: a starting point and an ending point, where the direction, curvature, and curvature change rate of each point can be represented by the above three equations respectively. Thus, there are a total of six equations for each spiral path or reference line segment. These six equations can be utilized to determine the coefficients a, b, c, d, e, and f of the corresponding quintic function.

When a spiral path is utilized to represent a curve between consecutive reference points in the Cartesian space, there is a need to build a connection or bridge between the spiral path curve length and a position in the Cartesian space. Given a spiral path $\theta_i(s)$ defined by $\{\theta_i, d\theta_i, d^2\theta_i, \theta_{i+1}, d\theta_{i+1}, d^2\theta_{i+1}, \Delta s\}$, and path starting point $p_i = (x_i, y_i)$, the coordinate of point p = (x, y) can be determined given any s = [0, $\Delta$s]. In one embodiment, the coordinates of a given point can be obtained based on the following formula:

$$x = x_i + \int_0^s cos(\theta_i(s))ds$$

$$y = y_i + \int_0^s sin(\theta_i(s))ds$$

When s = $\Delta$s, the ending coordinates $p_i+1$ are obtained given curve $\theta_i$ and starting coordinates $p_i = (x_i, y_i)$. The optimization of the quintic functions are performed such that the overall output of the quintic functions of the spiral paths reach minimum, while the above set of constraints are satisfied. In addition, the coordinates of the terminal point derived from the optimization is required to be within a predetermined range (e.g., tolerance, error margins) with respect to the corresponding coordinates of the initial reference line. That is, the difference between each optimized point and the corresponding point of the initial reference line should be within a predetermined threshold.

According to one embodiment, an objective function is defined based on the quintic functions of all spiral paths. An optimization is performed on the input parameters of the quintic functions of the objective function, while the constraints described above are satisfied. In one embodiment, the objective function represents a sum of all quintic functions associated with all reference line segments, and the optimization is performed, such that the output of the objective function reaches minimum while the above set of constraints are satisfied. The optimization is iteratively performed, the variables are modified, and the set of constraints are evaluated, until the output of the objective function in a current iteration is similar to the output of the objective function in a previous iteration. The term of "similar" herein refers to the difference between the outputs of two consecutive iterations is below a predetermined threshold.

In this approach, a reference line (e.g., a reference line segment such as the second reference line segment $S_2$ as shown in Figure 5) can be modeled as a sequence of piecewise quintic spiral paths with two consecutive reference points connected with one spiral path. The input points are allowed to slightly deviate from their original positions within a predetermined boundary or boundaries, which may be defined or configured by a user. The boundaries model the confidence level of the sensor accuracy, handling labeling errors, etc., when generating the map data. In one embodiment, the variables in the optimization are selected as follows, given n points

$$p_0 = (\bar{x}_0, \bar{y}_0), \ldots, p_{n-1} = (\bar{x}_{n-1}, \bar{y}_{n-1});$$

$$\begin{array}{cccccc}
\theta_0 & \theta_1 & \theta_2 & \ldots & \theta_{n-2} & \theta_{n-1} \\
\dot{\theta}_0 & \dot{\theta}_1 & \dot{\theta}_2 & \ldots & \dot{\theta}_{n-2} & \dot{\theta}_{n-1} \\
\ddot{\theta}_0 & \ddot{\theta}_1 & \ddot{\theta}_2 & \ldots & \ddot{\theta}_{n-2} & \ddot{\theta}_{n-1} \\
& \Delta s_0 & \Delta s_1 & \ldots & \Delta s_{n-2} &
\end{array}$$

The smoothness of the reference line is modeled as the absolute value of the curvature change rate, i.e., a second order derivative of quintic function $\theta(s)$.

According to one embodiment, each of the reference line segment is segmented into a number of sub-segments. Each sub-segment represents a piecewise sub-path within the piecewise path of the reference line segment. Each sub-segment is represented by the quintic function of the same reference line segment. Thus, there are m intermediate points from one piecewise path as probing points. The goal is to minimize the quintic functions of the sub-segments. An objective function is defined as a sum of the outputs of the quintic functions of the sub-segments of each of the reference line segments. In one embodiment, an objective function is defined as follows:

$$\sum_{i=0}^{n-2} \sum_{j=0}^{m-1} \ddot{\theta}_i(s_j)^2$$

subject to the following point positional movement constraints:

$$(x_i - \bar{x}_i)^2 + (y_i - \bar{y}_i)^2 \le r_i^2$$

$$\ddot{\theta}(s_0) = kappa_2$$

$$\ddot{\theta}(s_i) = kappa_3$$

where r is a tunable parameter.

In one embodiment, the objective function represents a sum of square of a second derivative of each quintic polynomial function. Coordinates $(x_i, y_i)$ represent the original position of input point $p_i$, and $r_i$ represents a boundary for point $p_i$, which may be user configurable. Coordinates $(x_i, y_i)$ are derived based on the integrals of the corresponding quintic functions as described above.

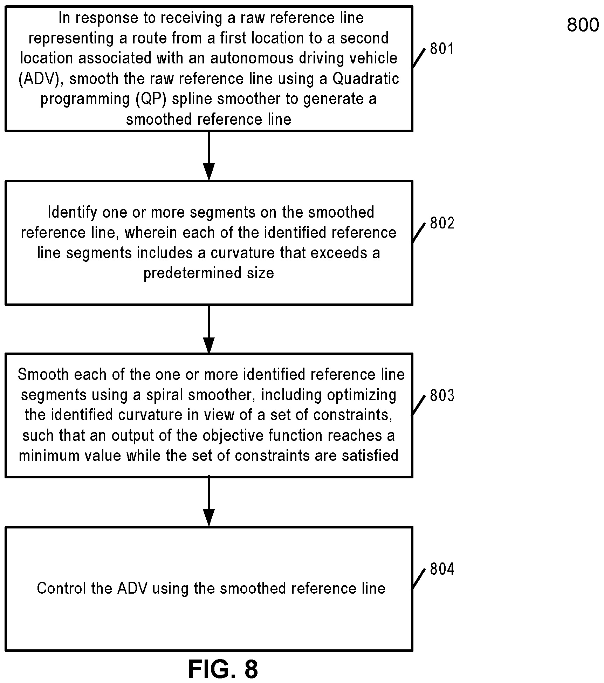

Figure 8 is a flow diagram illustrating an example of a process for smoothing a reference line according to one embodiment. Process 800 may be performed by processing logic which may include software, hardware, or a combination thereof. For example, process 800 may be performed by planning module 305 of Figure 4.

Referring to Figure 8, in operation 801, the processing logic smooths a raw reference line using a Quadratic programming (QP) spline smoother to generate a smoothed reference line, in response to receiving the raw reference line representing a route from a first location to a second location associated with an autonomous driving vehicle (ADV). In operation 802, the processing logic identifies one or more segments on the smoothed reference line, wherein each of the identified reference line segments includes a curvature that exceeds a predetermined size. In operation 803, the processing logic smooths each of the one or more identified reference line segments using a spiral smoother, including optimizing the identified curvature in view of a set of constraints, such that an output of the objective function reaches a minimum value while the set of constraints are satisfied. In operation 804, the ADV is controlled using the smoothed reference line.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

All of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present disclosure are not described with reference to any particular programming language. It will be appreciated that a variety of programming languages may be used to implement the teachings of embodiments of the disclosure as described herein.

In the foregoing specification, embodiments of the disclosure have been described with reference to specific exemplary embodiments thereof. It will be evident that various modifications may be made thereto without departing from the scope of the disclosure as set forth in the following claims. The specification and drawings are, accordingly, to be regarded in an illustrative sense rather than a restrictive sense.

**Claims**

1.  A computer-implemented method for operating an autonomous driving vehicle (ADV), the method comprising:

    in response to receiving a raw reference line representing a route from a first location to a second location associated with an ADV, smoothing (801) the raw reference line using a Quadratic programming (QP) spline smoothing method to generate a first smoothed reference line;
    **characterised in that** the method further comprises:

    identifying (802) one or more segments on the smoothed reference line, wherein each of the identified reference line segments includes a curvature that exceeds a predetermined size;
    smoothing (803) each of the segments using a spiral smoothing method, including optimizing the segments in view of a set of constraints using an objective function, such that an output of the objective function reaches a minimum value while the set of constraints are satisfied, to generate a second smoothed reference line; and
    planning a trajectory based on the second smoothed reference line to control (804) the ADV.

2.  The method of claim 1, wherein the size of the curvature is measured by a radius or a degree of the curvature.

3.  The method of claim 1, wherein the QP spline smoothing method and the spiral smoothing are performed during a same planning cycle.

4.  The method of claim 1, wherein the QP spline smoothing method and the spiral smoothing method are performed during different planning cycles.

5.  The method of claim 1, wherein the predetermined size is dynamically adjustable based on road conditions of the route and a speed of the ADV.

6.  The method of claim 1, wherein at least one of the set of constraints are dynamically tunable, wherein the set of constraints represent an initial location, a direction, and a curvature of the ADV.

7.  The method of claim 1, wherein the one or more curvatures includes one or more of a U-turn, a left turn, or a right turn.

8.  A non-transitory machine-readable medium having instructions stored, which when executed by a processor, causing the processor to perform operations of operating an autonomous driving vehicle (ADV), the operations comprising:

    in response to receiving a raw reference line representing a route from a first location to a second location associated with an ADV, smoothing (801) the raw reference line using a Quadratic programming (QP) spline smoothing method to generate a first smoothed reference line;
    **characterised in that** the operations further comprise:

identifying (802) one or more segments on the smoothed reference line, wherein each of the identified reference line segments includes a curvature that exceeds a predetermined size;

smoothing (803) each of the segments using a spiral smoothing method, including optimizing the segments in view of a set of constraints using an objective function, such that an output of the objective function reaches a minimum value while the set of constraints are satisfied, to generate a second smoothed reference line; and

planning a trajectory based on the second smoothed reference line to control (804) the ADV.

9. The non-transitory machine-readable medium of claim 8, wherein the size of the curvature is measured by a radius or a degree of the curvature.

10. The non-transitory machine-readable medium of claim 8, wherein the QP spline smoothing method and the spiral smoothing method are performed during a same planning cycle.

11. The non-transitory machine-readable medium, of claim 8, wherein the QP spline smoothing method and the spiral smoothing method are performed during different planning cycles.

12. The non-transitory machine-readable medium of claim 8, wherein the predetermined size is dynamically adjustable based on road conditions of the route and a speed of the ADV.

13. The non-transitory machine-readable medium of claim 8, wherein at least one of the set of constraints are dynamically tunable, wherein the set of constraints represent an initial location, a direction, and a curvature of the ADV.

14. The non-transitory machine-readable medium of claim 8, wherein the one or more curvatures includes one or more of a U-turn, a left turn, or a right turn.

15. A data processing system, comprising:

a processor; and

a memory coupled to the processor to store instructions, which when executed by the processor, cause the processor to perform the method according to any one of claims 1 to 7.

**Patentansprüche**

1. Computerimplementiertes Verfahren zum Betreiben eines autonom fahrenden Fahrzeugs (ADV), wobei das Verfahren umfasst:

als Reaktion auf den Empfang einer unverarbeiteten Referenzlinie, die eine Route von einem ersten Ort zu einem zweiten Ort darstellt, die mit einem ADV verbunden ist, Glätten (801) der unverarbeiteten Referenzlinie unter Verwendung eines Splineglättungsverfahrens mit quadratischer Programmierung (QP), um eine erste geglättete Referenzlinie zu erzeugen; **dadurch gekennzeichnet, dass** das Verfahren ferner umfasst:

Identifizieren (802) eines oder mehrerer Segmente auf der geglätteten Referenzlinie, wobei jedes der identifizierten Referenzliniensegmente eine Krümmung aufweist, die eine vorbestimmte Größe überschreitet;

Glätten (803) jedes der Segmente unter Verwendung eines Spiralglättungsverfahrens, einschließlich Optimieren der Segmente im Hinblick auf einen Satz von Bedingungen unter Verwendung einer Zielfunktion, so dass eine Ausgabe der Zielfunktion einen Minimalwert erreicht, während der Satz von Bedingungen erfüllt ist, um eine zweite geglättete Referenzlinie zu erzeugen; und

Planen einer Trajektorie basierend auf der zweiten geglätteten Referenzlinie, um das ADV zu steuern (804).

2. Verfahren nach Anspruch 1, wobei die Größe der Krümmung durch einen Radius oder einen Grad der Krümmung gemessen wird.

3. Verfahren nach Anspruch 1, wobei das QP-Splineglättungsverfahren und die Spiralglättung während desselben Planungszyklus durchgeführt werden.

4. Verfahren nach Anspruch 1, wobei das QP-Splineglättungsverfahren und das Spiralglättungsverfahren während unterschiedlicher Planungszyklen durchgeführt werden.

**5.** Verfahren nach Anspruch 1, wobei die vorbestimmte Größe dynamisch auf der Grundlage von Straßenbedingungen der Route und einer Geschwindigkeit des ADV einstellbar ist.

**6.** Verfahren nach Anspruch 1, wobei mindestens einer des Satzes von Bedingungen dynamisch abstimmbar ist, wobei der Satz von Bedingungen einen Anfangsort, eine Richtung und eine Krümmung des ADV darstellen.

**7.** Verfahren nach Anspruch 1, wobei die eine oder die mehreren Krümmungen eine oder mehrere von einer Kehrtwendung, einer Linkskurve oder einer Rechtskurve umfassen.

**8.** Nicht-flüchtiges maschinenlesbares Medium, auf dem Befehle gespeichert sind, die, wenn sie von einem Prozessor ausgeführt werden, den Prozessor veranlassen, Operationen zum Betreiben eines autonom fahrenden Fahrzeugs (ADV) durchzuführen, wobei die Operationen umfassen:
als Reaktion auf den Empfang einer unverarbeiteten Referenzlinie, die eine Route von einem ersten Ort zu einem zweiten Ort darstellt, die mit einem ADV verbunden ist, Glätten (801) der unverarbeiteten Referenzlinie unter Verwendung eines Splineglättungsverfahrens mit quadratischer Programmierung (QP), um eine erste geglättete Referenzlinie zu erzeugen; **dadurch gekennzeichnet, dass** die Operationen ferner umfassen:

Identifizieren (802) eines oder mehrerer Segmente auf der geglätteten Referenzlinie, wobei jedes der identifizierten Referenzliniensegmente eine Krümmung aufweist, die eine vorbestimmte Größe überschreitet;
Glätten (803) jedes der Segmente unter Verwendung eines Spiralglättungsverfahrens, einschließlich Optimieren der Segmente im Hinblick auf einen Satz von Bedingungen unter Verwendung einer Zielfunktion, so dass eine Ausgabe der Zielfunktion einen Minimalwert erreicht, während der Satz von Bedingungen erfüllt ist, um eine zweite geglättete Referenzlinie zu erzeugen; und
Planen einer Trajektorie basierend auf der zweiten geglätteten Referenzlinie, um das ADV zu steuern (804).

**9.** Nicht-flüchtiges maschinenlesbares Medium nach Anspruch 8, wobei die Größe der Krümmung durch einen Radius oder einen Grad der Krümmung gemessen wird.

**10.** Nicht-flüchtiges maschinenlesbares Medium nach Anspruch 8, wobei das QP-Splineglättungsverfahren und das Spiralglättungsverfahren während desselben Planungszyklus durchgeführt werden.

**11.** Nicht-flüchtiges maschinenlesbares Medium nach Anspruch 8, wobei das QP-Splineglättungsverfahren und das Spiralglättungsverfahren während unterschiedlicher Planungszyklen durchgeführt werden.

**12.** Nicht-flüchtiges maschinenlesbares Medium nach Anspruch 8, wobei die vorbestimmte Größe dynamisch auf der Grundlage von Straßenbedingungen der Route und einer Geschwindigkeit des ADV einstellbar ist.

**13.** Nicht-flüchtiges maschinenlesbares Medium nach Anspruch 8, wobei mindestens einer des Satzes von Bedingungen dynamisch abstimmbar ist, wobei der Satz von Bedingungen einen Anfangsort, eine Richtung und eine Krümmung des ADV darstellen.

**14.** Nicht-flüchtiges maschinenlesbares Medium nach Anspruch 8, wobei die eine oder die mehreren Krümmungen eine oder mehrere von einer Kehrtwendung, einer Linkskurve oder einer Rechtskurve umfassen.

**15.** Datenverarbeitungssystem, das umfasst:

einen Prozessor; und
einen mit dem Prozessor verbundenen Speicher zum Speichern von Befehlen, die, wenn sie vom Prozessor ausgeführt werden, den Prozessor veranlassen, das Verfahren nach einem der Ansprüche 1 bis 7 durchzuführen.

**Revendications**

**1.** - Procédé mis en oeuvre par ordinateur pour faire fonctionner un véhicule à conduite autonome (ADV), le procédé comprenant :
en réponse à la réception d'une ligne de référence brute représentant un itinéraire d'un premier emplacement à un second emplacement associé à un ADV, lisser (801) la ligne de référence brute en utilisant un procédé de lissage par spline à programmation quadratique (PQ) pour générer une première ligne de référence lissée ; **caractérisé**

**par le fait que** le procédé comprend en outre :

identifier (802) un ou plusieurs segments sur la ligne de référence lissée, chacun des segments de ligne de référence identifiés comprenant une courbe qui dépasse une taille prédéterminée ;

lisser (803) chacun des segments en utilisant un procédé de lissage par spirale, comprenant optimiser les segments compte tenu d'un ensemble de contraintes en utilisant une fonction objective, de telle sorte qu'une sortie de la fonction objective atteint une valeur minimale tandis que l'ensemble de contraintes est satisfait, pour générer une seconde ligne de référence lissée ; et

planifier une trajectoire sur la base de la seconde ligne de référence lissée pour commander (804) l'ADV.

2. - Procédé selon la revendication 1, dans lequel la taille de la courbe est mesurée par un rayon ou un degré de la courbure.

3. - Procédé selon la revendication 1, dans lequel le procédé de lissage par spline PQ et le lissage par spirale sont réalisés pendant un même cycle de planification.

4. - Procédé selon la revendication 1, dans lequel le procédé de lissage par spline PS et le procédé de lissage par spirale sont réalisés pendant des cycles de planification différents.

5. - Procédé selon la revendication 1, dans lequel la taille prédéterminée est ajustable dynamiquement sur la base des conditions routières de l'itinéraire et d'une vitesse de l'ADV.

6. - Procédé selon la revendication 1, dans lequel au moins une de l'ensemble de contraintes est accordable dynamiquement, l'ensemble de contraintes représentant un emplacement initial, une direction et une courbe de l'ADV.

7. - Procédé selon la revendication 1, dans lequel la ou les courbes comprennent un ou plusieurs parmi un demi-tour, un virage à gauche ou un virage à droite.

8. - Support non transitoire lisible par machine, ayant des instructions stockées, lesquelles, lorsqu'elles sont exécutées par un processeur, amènent le processeur à réaliser des opérations pour faire fonctionner un véhicule à conduite autonome (ADV), les opérations comprenant :

en réponse à la réception d'une ligne de référence brute représentant un itinéraire d'un premier emplacement à un second emplacement associé à un ADV, lisser (801) la ligne de référence brute en utilisant un procédé de lissage par spline à programmation quadratique (PQ) pour générer une première ligne de référence lissée ; **caractérisé par le fait que** les opérations comprennent en outre :

identifier (802) un ou plusieurs segments sur la ligne de référence lissée, chacun des segments de ligne de référence identifiés comprenant une courbe qui dépasse une taille prédéterminée ;

lisser (803) chacun des segments en utilisant un procédé de lissage par spirale, comprenant optimiser les segments compte tenu d'un ensemble de contraintes en utilisant une fonction objective, de telle sorte qu'une sortie de la fonction objective atteint une valeur minimale tandis que l'ensemble de contraintes est satisfait, pour générer une seconde ligne de référence lissée ; et

planifier une trajectoire sur la base de la seconde ligne de référence lissée pour commander (804) l'ADV.

9. - Support non transitoire lisible par machine selon la revendication 8, dans lequel la taille de la courbe est mesurée par un rayon ou un degré de la courbe.

10. - Support non transitoire lisible par machine selon la revendication 8, dans lequel le procédé de lissage par spline PQ et le procédé de lissage par spirale sont réalisés pendant un même cycle de planification.

11. - Support non transitoire lisible par machine selon la revendication 8, dans lequel le procédé de lissage par spline PS et le procédé de lissage par spirale sont réalisés pendant des cycles de planification différents.

12. - Support non transitoire lisible par machine selon la revendication 8, dans lequel la taille prédéterminée est ajustable dynamiquement sur la base des conditions routières de l'itinéraire et d'une vitesse de l'ADV.

13. - Support non transitoire lisible par machine selon la revendication 8, dans lequel au moins une de l'ensemble de contraintes est accordable dynamiquement, l'ensemble de contraintes représentant un emplacement initial, une direction et une courbe de l'ADV.

**14.** - Support non transitoire lisible par machine selon la revendication 8, dans lequel la ou les courbes comprennent une ou plusieurs parmi un demi-tour, un virage à gauche ou un virage à droite.

**15.** - Système de traitement de données, comprenant :

un processeur ; et
une mémoire couplée au processeur pour stocker des instructions, lesquelles, lorsqu'elles sont exécutées par le processeur, amènent le processeur à exécuter le procédé selon l'une quelconque des revendications 1 à 7.

100

| | |
|---|---|
| **Sensor System**<br>115 | |
| **Control System**<br>111 | |
| **Wireless Communication System**<br>112 | |
| **User Interface System**<br>113 | |
| **Perception and Planning System**<br>110 | |

**Autonomous Vehicle**
101

Network
102

Server(s)
(e.g., map & location)
104

⋮

| | |
|---|---|
| Machine Learning Engine<br>122 | Data Collector<br>121 |
| Driving Statistics<br>123 | Algorithms/Models<br>124 |

Server(s) (e.g., data
analytics system)
103

**FIG. 1**

EP 3 861 291 B1

**FIG. 2**

**FIG. 3A**

**FIG. 3B**

Routing Module
307

Smoothing Module
308

QP Spline Smoother
401

Spiral Smoother
403

Memory
351

Sensor System
115

Map and Route Information
311

Control System
111

Persistent Storage Device
352

Perception and Planning System
110

EP 3 861 291 B1

**FIG. 4**

FIG. 5

FIG. 6

**FIG. 7**

In response to receiving a raw reference line representing a route from a first location to a second location associated with an autonomous driving vehicle (ADV), smooth the raw reference line using a Quadratic programming (QP) spline smoother to generate a smoothed reference line — 801

Identify one or more segments on the smoothed reference line, wherein each of the identified reference line segments includes a curvature that exceeds a predetermined size — 802

Smooth each of the one or more identified reference line segments using a spiral smoother, including optimizing the identified curvature in view of a set of constraints, such that an output of the objective function reaches a minimum value while the set of constraints are satisfied — 803

Control the ADV using the smoothed reference line — 804

800

**FIG. 8**

**EP 3 861 291 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190079528 A1
- US 20190361443 A1